# EUROPEAN PATENT SPECIFICATION

(11) **EP 3 480 116 B1**
(45) Date of publication and mention of the grant of the patent: **13.07.2022**
(21) Application number: 18204964.3
(22) Date of filing: 07.11.2018
(51) Int. Cl.: B64D 29/06

(54) **ELECTRO-MECHANICAL ACTUATOR SYSTEMS FOR OPENING AND CLOSING OF AIRCRAFT ENGINE COWL DOORS**
ELEKTROMECHANISCHE AKTUATORSYSTEME ZUM ÖFFNEN UND SCHLIESSEN VON FLUGZEUGTRIEBWERKSVERKLEIDUNGSTÜREN
SYSTÈMES D'ACTIONNEUR ÉLECTROMÉCANIQUES PERMETTANT D'OUVRIR ET DE FERMER DES PORTES DE CAPOT DE MOTEUR D'AÉRONEF

(30) Priority: 07.11.2017 IN 201711039631
(43) Date of publication of application: 08.05.2019
(73) Proprietor: Hamilton Sundstrand Corporation, Charlotte, NC 28217-4578 (US)
(72) Inventor: JOHN, Rajeev T., 560037 Bangalore (IN)
(74) Representative: Dehns

(56) References cited:
- EP-A2- 0 076 750
- EP-A2- 2 604 514
- WO-A1-2004/113707
- GB-A- 2 435 877
- US-A- 2 701 478
- US-A- 3 704 765
- US-A1- 2003 192 987
- US-B1- 6 516 567

## Description

(deleted)

### BACKGROUND

Embodiments of the present disclosure relate to a linear actuator and more specifically, to an electro-mechanical actuator used for opening and closing of the cowl doors of an aircraft engine.

Linear hydraulic actuators known as door opening system (DOS) actuators are normally employed to open aircraft engine cowl doors in order to gain access to the engine for maintenance operations. DOS actuators are currently hydraulically operated by drawing power from a ground support hand pump which supplies pressurized hydraulic oil. Current DOS actuators have multiple hydraulic components which require careful design and maintenance for durability and proper functioning. The current hydraulic actuators face many challenges like decreased performance at cold temperatures due to increase in oil viscosity, malfunctioning of the mechanical lock, hydraulic oil contamination, hydraulic oil spillage, oil leakage from pressure relief valves and seals etc. Hence there is a need for an improved cowl door opening system that is simple, reliable, cost effective, more "green" and light in weight. Each of US 2003/192987 A1, US 2 701 478 A, EP 0 076 750 A2, US 3 704 765 A, GB 2 435 877 A, US 6 516 567 B1, EP 2 604 514 A2 and WO 2004/113707 A1 discloses an actuator suitable for use in vehicles such as aircraft.

### BRIEF DESCRIPTION

According to the invention, a system for controlling the movement of an aircraft engine cowl door is provided, the system comprising: an actuator assembly including: a housing; a screw shaft arranged at least partially within a hollow interior of the housing, the screw shaft being rotatable about an axis relative to the housing, a transmission system coupled to the screw shaft to impart rotation to the screw shaft about the axis; a nut engaged with the screw shaft; a piston rod having a first end and a second end and a hollow interior, the first end being connected to the nut, a rod end mounted to the second end of the piston rod for connecting the nut to the cowl door of the engine, wherein the nut is translatable relative to the screw shaft to transition the cowl door between a first position and a second position, and a lost motion device coupled to the piston rod and disposed within the hollow interior of the piston rod, the lost motion device comprising a compression coil spring arranged within the hollow interior of the piston rod and between an inwardly extending flange of the piston rod and the rod end, wherein the rod end is slidably mounted in the hollow piston rod, the lost motion device being operable to absorb mechanical vibration of the cowl door and thermal expansion of the engine casing.

In addition to the features described above, the nut may include a key and an interior surface of the housing may include a key way within which the key is received.

In further embodiments the system comprises a first bracket mounted adjacent a first end of the housing and a second bracket mounted at an end of the piston rod, wherein the first bracket couples the actuator assembly to an engine casing and the second bracket couples the actuator assembly to the cowl door.

(deleted)

In further embodiments, the transmission comprises a pair of bevel gears.

In further embodiments, the transmission couples the screw shaft to a drive input including a torque limiter, wherein the torque limiter is configured to slip at an end of a stroke of the piston rod.

Further embodiments, comprise a no-back device coupled to the screw shaft.

In further embodiments, the actuator assembly is manually powered.

Further embodiments comprise a crank coupled to an input of the transmission.

In further embodiments, the actuator system is electrically powered.

Further embodiments comprise an electric motor operably coupled to the actuator assembly via a flexible rotary shaft.

In further embodiments, the electric motor receives power from a power supply.

Further embodiments comprise a speed reduction gear box coupled to the electric motor and a switch connected to an electrical power source which is capable of changing the polarity of the input to the electric motor such that the direction of rotation of the motor can be reversed.

In further embodiments, movement of the cowl door between the first position and the second position provides access to the engine for maintenance.

A method of opening and closing the cowl doors of an aircraft engine according to claim 11 is furthermore provided.

Further embodiments of the method comprise rotating the screw shaft in a second, opposite direction such that the nut coupled to the screw shaft moves relative to the screw shaft, thereby causing the movable cowl door to translate from the second position to the first position.

In further embodiments of the method, providing torque to the drive input includes transmitting torque from an electric motor to the drive input via a flexible rotary shaft.

In further embodiments of the method, providing torque to the drive input includes manually supplying a torque to the drive input.

In further embodiments of the method, manually supplying the torque includes rotating a crank.

### BRIEF DESRCIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a side view of a typical aircraft engine including a nacelle assembly with cowl doors;
FIG. 2 is a schematic illustration of a front view of a typical aircraft engine showing the engine casing and the nacelle assembly and the cowl door actuators in the stowed and deployed conditions;
FIG. 3 is a schematic diagram of a door operating system according to an embodiment;
FIG. 4 is a cross-sectional view of an actuator assembly of the door operating system according to an embodiment; and
FIG. 5 is a cross-sectional view of the actuator assembly taken along cross section line A-A according to an embodiment.

### DETAILED DESCRIPTION

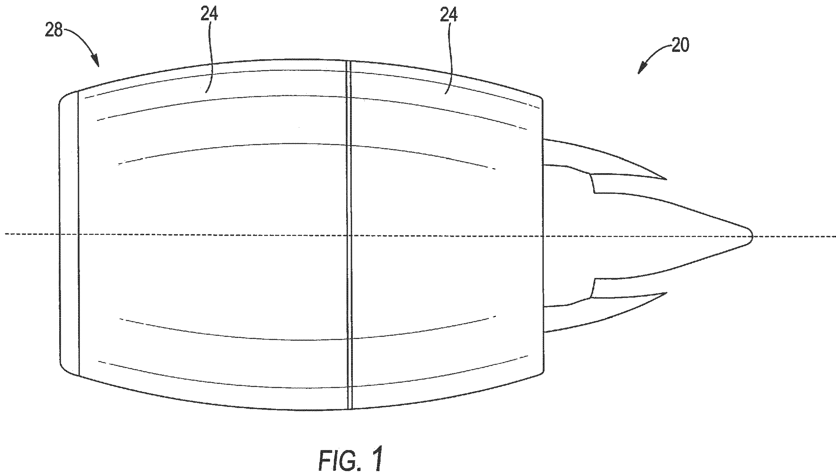

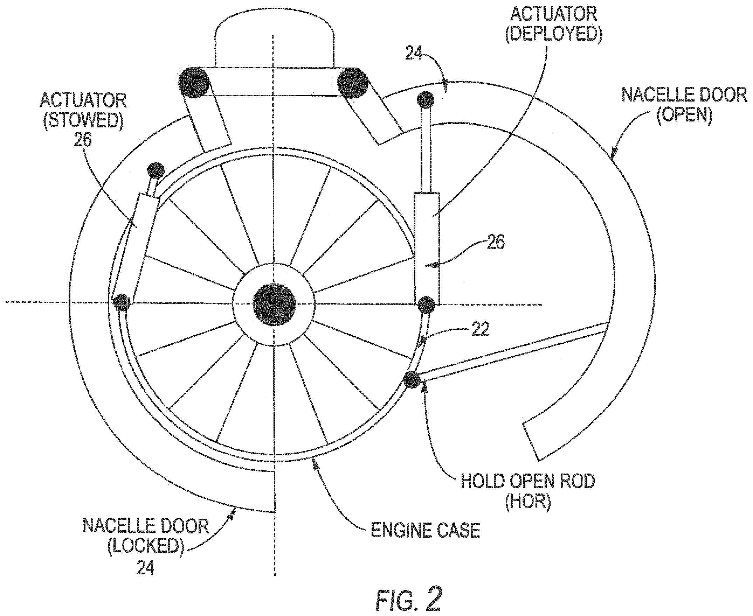

With reference to FIGS. 1 & 2 an aircraft engine assembly 20 is schematically illustrated which includes an engine casing 22, cowl doors 24 and cowl door opening actuators 26. The engine casing 22 houses engine components which are used to generate motive power for an aircraft. A nacelle structure 28 encloses the engine casing 22. Cowl doors 24 are part of the engine nacelle 28 and can be opened to gain access to the engine components for maintenance operations. The actuator 26 is interposed between engine casing 22 and cowl door 24. The concepts described herein shall be applied to various types of aircraft engines like turbo-fan engines, turbo-prop engines, turbo-jet engines, turbo-shaft engines, any future electric or hybrid engines which incorporate one or more engine cowl doors.

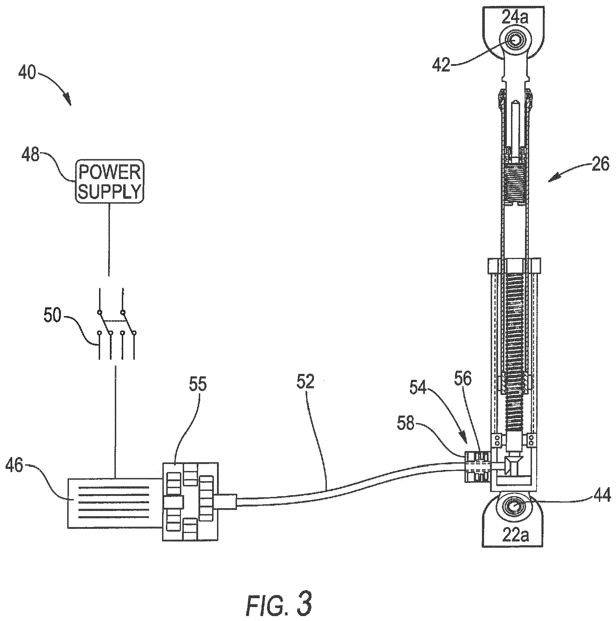

Referring to FIGS. 3-5, an embodiment of an aircraft engine cowl door opening system 40 is illustrated. The door opening system 40 is an electro-mechanical system including an actuator assembly, such as actuator 26 for example, connected at a first end 42 to a mounting bracket (not shown) on the moveable cowl door 24 and at a second end 44 to a mounting bracket (not shown) on the engine casing 22. The actuator assembly 26 is operable to translate the cowl door 24 connected thereto between a first, closed position, and a second, open position. The actuator assembly 26 is driven by an electric motor 46 operably coupled to a power supply 48. In an embodiment, a switch 50 is disposed between the electric motor 46 and the power supply 48 to selectively reverse the polarity of input to the electric motor 46 such that it can be run in clockwise as well as counter clockwise directions to extend or retract the actuator.

In addition the switch 50 can be used to terminate the supply of power to the motor 46 to stop the power input to the actuator assembly 26 at both ends of stroke thereof (fully retracted or fully extended positions of the actuator assembly 26) or at any intermediate stroke positions. In the illustrated, non-limiting embodiment, the switch 50 is a double pole double throw (DPDT) switch; however, any suitable switch 50 is within the scope of the disclosure. A flexible rotary shaft 52 connects the electric motor 46 to a corresponding drive input 54 of the actuator assembly 26. A gearbox 55, may, but need not be, arranged at the interface between the motor 46 and the flexible rotary shaft 52 to appropriately change the speed and torque transmitted from the motor 46 to the actuator assembly 26. Alternatively, the gearbox 55 can be integrated into the actuator assembly 26 as part of the drive input 54 and the electric motor 46 can be connected to the drive input 54 using a flexible rotary shaft.

In the illustrated non-limiting embodiment, the drive input 54 includes a torque limiter 56 for limiting the torque transmitted to the actuator assembly 26 and a coupling 58 for connecting to the flexible rotary shaft 52. Any suitable torque limiter such as a friction-plate type or ball-detent type may be used to limit the torque transmitted to the actuator assembly 26.

In another embodiment, the actuator assembly 26 may be manually operated by means of rotation of a lever or crank connected to the drive input 54. Accordingly, the power supply 48, switch 50, electric motor 46 and flexible shaft 52 may be eliminated. Such embodiments may be useful when the ground support equipment (electric motor and speed reduction gear box) is not available to operate the door opening system 40.

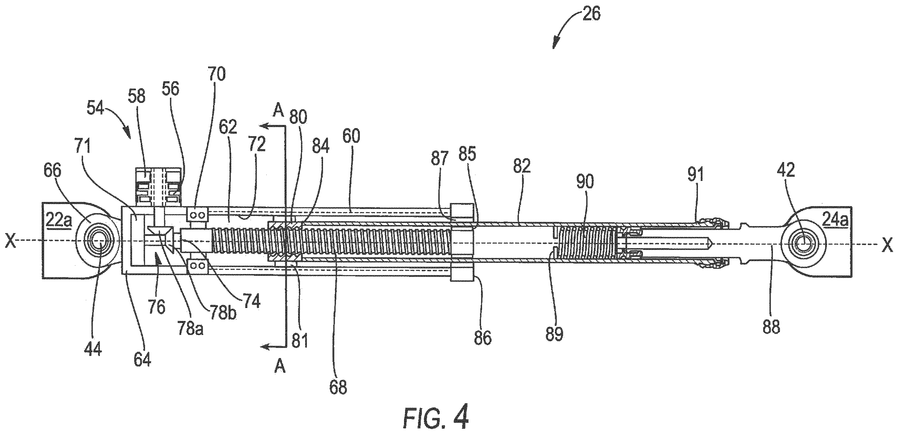

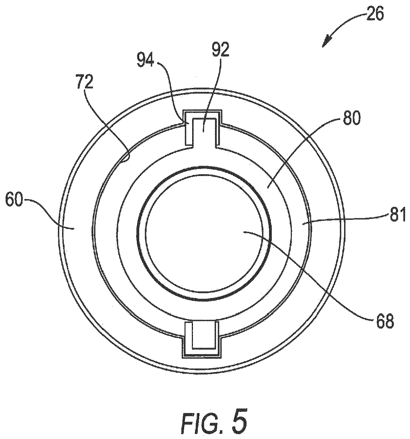

With specific reference now to FIGS. 4 and 5, the actuator assembly 26 includes a housing 60 having a substantially hollow interior 62. Arranged at the first end 64 of the housing 60 is a lug 66 configured to couple to a bracket 22a on the engine case 22. Mounted within the hollow interior 62 of the housing 60 is a screw shaft 68. The screw shaft 68 can be a lead screw shaft such as an ACME screw shaft for example, or it can be a ball screw shaft for higher efficiency. The screw shaft 68 may extend over only a portion of the length of the housing 60, or alternatively, over substantially the entire length of the housing 60. In the illustrated, non-limiting embodiment, the screw shaft 68 is supported at one end by one or more bearings 70 positioned between a portion of the shaft 68 and the interior surface 72 of the housing 60. At the other end, the screw shaft 68 is supported on bearing 85 which bears against a piston rod 82 which in turn is supported by bearing 87 attached to the housing 60.

The screw shaft 68 is configured to rotate about its longitudinal axis X relative to the housing 60. An end 74 of the screw shaft 68 is connected to the drive input 54 through a transmission 76 located generally adjacent a first end 64 of the housing 60. In the illustrated, non-limiting embodiment, the transmission 76 includes a plurality of bevel gears 78a & 78b. However, it should be understood that any suitable configuration of the transmission 76 is contemplated herein. The transmission 76 is configured to transmit power from the drive input 54 to the screw shaft 68 to rotate the screw shaft 68 about its longitudinal axis X in either a first, clockwise direction or a second, counter clockwise direction.

As shown, a nut 80 located within the hollow interior 62 of the housing 60 is engaged with the screw shaft 68. A generally hollow piston rod 82 is connected at a first end 84 to the nut 80 and extends through an opening formed in the second, opposite end 86 of the housing 60. A rod end 88 for connecting to a bracket 24a of the cowl door 24 is coupled to the second end 91 of the piston rod 82. In addition, a lost motion device 90 is arranged between an inwardly extending flange 89 of the piston rod 82 and the rod end 88. The lost motion device 90 is configured to absorb mechanical vibration of the cowl door 24 and prevent transmission of such vibration to the engine casing 22. Additionally the lost motion device 90 provides a means to prevent generation of punch forces resulting from thermal expansion of the engine casing 22. The lost motion device 90 comprises a coil spring.

In operation, the torque is transmitted to the actuator assembly 26, such as from the electric motor 46 through the flex shaft 52 or manually, via the drive input 54. This torque causes a first gear 78a of the transmission 76 to rotate, which in turn causes a second gear 78b of the transmission 76 to rotate. Because the screw shaft 68 is operably coupled to the second gear 78b of the transmission 76, this rotation of the second gear 78b drives rotation of the screw shaft 68 about its longitudinal axis X.

A nut 80 is engaged with the screw shaft 68. The nut 80 can be a lead nut or a ball nut. In an embodiment, at least one key 92 extends outwardly from the nut 80 and is received within a corresponding key way 94 formed in the interior surface 72 of the housing 60. In the illustrated, non-limiting embodiment, engagement between the key 92 on the nut 80 and the key way 94 on the housing 60, restricts free rotation of the nut 80 and the piston rod 82 along with the screw shaft 68, during operation of the actuator assembly 26. As the rotation of the nut 80 is restrained by the key way slots 94, the nut 80 is forced to translate in the longitudinal direction of the screw shaft 68, when the screw shaft 68 rotates. A bearing 81 is interposed between the nut 80 and the housing inner surface 72 to reduce friction and wear as the nut 80 slides on the housing inner surface 72.

As the screw shaft 68 is rotated in a first direction, the nut 80 translates toward the second end 86 of the housing 60, causing the piston rod 82, and therefore the cowl door 24 coupled to the piston rod 82, to move from a first, closed position to a second, open position. Similarly, when the screw shaft 68 is rotated in a second, opposite direction, the nut 80 translates toward the first end 64 of the housing 60. As the nut 80 moves from the second end 86 toward the first end 64, the piston rod 82, and therefore the cowl door 24 coupled to the piston rod 82, move from a second, open position to a first, closed position. During operation of the actuator assembly 26, the torque limiter 56 is operable to limit the torque at both ends of the stroke of the piston rod 82 as the nut 80 comes in contact with the end stops 70 & 86. In addition, the torque limiter 56 protects the actuator assembly 26 in the event that a jam or stall condition arises therein.

When a lead screw shaft 68 along with a lead nut 80 are used, the thread helical angle of the lead screw shaft 68 can be designed to avoid back drive of the nut 80 under external loads. As a result, in an embodiment, the actuator assembly 26 can carry weight of the cowl door 24 and the corresponding wind loads acting thereon when the nut 80 is at any position. However, for higher helix angles and efficiencies, a one way no-back device 71 can be coupled to the lead screw shaft 68 near the first end 64 of the housing 60 to avoid back drive under external loads. Instead of the lead screw and lead nut, a ball screw and ball nut along with a no-back device 71 may be used to increase the efficiency further.

At the ends of the stroke of the piston rod 82, as the nut 80 comes in contact with the end stops 70 or 86, the torque spikes up and the torque limiter 56 slips, thus protecting the actuator assembly 26 from a high torque. After the torque limiter 56 slips, the electric motor 46 can be switched off using the switch 50. To retract the actuator assembly 26, the switch 50 is thrown in the reverse direction, thereby introducing a polarity change in the electric motor 46 and causing it to run in the opposite direction of rotation. This in turn drives the screw shaft 68 in a direction which causes the nut 80 and piston rod 82 to translate in the closing direction of the cowl door 24. A suitable shock absorber (not shown) may be incorporated to absorb the impact of the nut 80 with the end stops 70 and 86.

Because the actuator assembly 26 and the door opening system 40 are electromechanical, the hydraulic circuit and the complexities and problems associated therewith, such as susceptibility to oil leakage or oil contamination or performance loss at cold temperature, can be eliminated, thereby creating a more reliable system 40. A mechanical lock has also been eliminated from the system because the threaded engagement of the nut 80 and the lead screw shaft 68 along with a no-back device if required, will sustain the load transferred from cowl door 24. In addition, manual operation of the actuator assembly 26 is still possible even if the ground support power is unavailable. The system 40 disclosed herein does not rely on any electrical or electronic feedback from the actuator assembly 26 and hence is cost effective, simple and reliable as there is no necessity for using proximity sensors, limit switches or rotary variable differential transformer (RVDT) for sensing the end of stroke positions to switch off power.

While the present invention has been described in detail in connection with only a limited number of embodiments, it should be readily understood that the present invention is not limited to such disclosed embodiments. Accordingly, the present invention is not to be seen as limited by the foregoing description, but is only limited by the scope of the appended claims.

## Claims

1. A system (40) for controlling the movement of an aircraft engine cowl door (24) comprising:
an actuator assembly (26) including:
a housing (60);
a screw shaft (68) arranged at least partially within a hollow interior of the housing (60), the screw shaft (68) being rotatable about an axis relative to the housing (60);
a transmission system coupled to the screw shaft (68) to impart rotation to the screw shaft (68) about the axis;
a nut (80) engaged with the screw shaft (68);
a piston rod (82) having a first end (84) and a second end (91) and a hollow interior, the first end (84) being connected to the nut (80); a rod end (88) mounted to the second end (91) of the piston rod for connecting the nut (80) to the cowl door (24) of the engine, wherein the nut (80) is translatable relative to the screw shaft (68) to transition the cowl door (24) between a first position and a second position; and
a lost motion device (90) coupled to the piston rod (82) and disposed within the hollow interior of the piston rod, the lost motion device comprising a compression coil spring arranged within the hollow interior of the piston rod (82) and between an inwardly extending flange (89) of the piston rod and the rod end (88), wherein the rod end (88) is slidably mounted in the hollow piston rod, the lost motion device (90) being operable to absorb mechanical vibration of the cowl door (24) and thermal expansion of the engine casing.

2. The system of claim 1, wherein the nut (80) includes a key (92) and an interior surface of the housing (60) includes a key way within which the key (92) is received.

3. The system of claim 1 or 2, further comprising a first bracket mounted adjacent a first end of the housing (60) and a second bracket mounted at an end of the piston rod (82), wherein the first bracket couples the actuator assembly (26) to an engine casing and the second bracket couples the actuator assembly to the cowl door (24).

4. The system of any preceding claim, wherein the transmission comprises a pair of bevel gears (78a, 78b).

5. The system of any preceding claim, wherein the transmission couples the screw shaft (68) to a drive input including a torque limiter (56), wherein the torque limiter (56) is configured to slip at an end of a stroke of the piston rod (82).

6. The system of any preceding claim, further comprising a no-back device (71) coupled to the screw shaft (68).

7. The system of any preceding claim, wherein the actuator assembly (26) is manually powered.

8. The system of any of claims 1 to 6, wherein the actuator assembly (26) is electrically powered.

9. The system of claim 8, further comprising an electric motor (46) operably coupled to the actuator assembly (26) via a flexible rotary shaft (52).

10. The system of claim 8, further comprising:
a speed reduction gear box coupled to the electric motor (46); and
a switch connected to an electrical power source which is capable of changing the polarity of the input to the electric motor such that the direction of rotation of the motor can be reversed.

11. A method of opening and closing the cowl doors (24) of an aircraft engine comprising:
providing the actuator system of claim 1, configured to translate a movable cowl;
providing a torque to a drive input of the actuator assembly (26), the drive input being in communication with the transmission;
rotating the screw shaft (68) in a first direction such that the nut (80) coupled to the screw shaft (68) moves relative to the screw shaft, thereby causing the movable cowl to translate from a first position to a second position.

12. The method of claim 11, further comprising rotating the screw shaft (68) in a second, opposite direction such that the nut (80) coupled to the screw shaft (68) moves relative to the screw shaft (68), thereby causing the movable cowl door (24) to translate from the second position to the first position.

13. The method of claim 11 or 12, wherein providing torque to the drive input includes transmitting torque from an electric motor (46) to the drive input via a flexible rotary shaft (52).

14. The method of claim 11 or 12, wherein providing torque to the drive input includes manually supplying a torque to the drive input.

## Patentansprüche

1. System (40) zum Steuern der Bewegung einer Flugzeugtriebwerksverkleidungstür (24), umfassend:
eine Aktuatorbaugruppe (26), die Folgendes beinhaltet:
ein Gehäuse (60);
eine Schraubenwelle (68), die zumindest teilweise innerhalb eines hohlen Innenraums des Gehäuses (60) angeordnet ist, wobei die Schraubenwelle (68) relativ zu dem Gehäuse (60) um eine Achse drehbar ist;
ein Getriebesystem, das an die Schraubenwelle (68) gekoppelt ist, um der Schraubenwelle (68) eine Drehung um die Achse zu verleihen;
eine Mutter (80), die mit der Schraubenwelle (68) in Eingriff steht;
eine Kolbenstange (82), die ein erstes Ende (84) und ein zweites Ende (91) und einen hohlen Innenraum aufweist, wobei das erste Ende (84) mit der Mutter (80) verbunden ist; ein Stangenende (88), das an dem zweiten Ende (91) der Kolbenstange angebracht ist, um die Mutter (80) mit der Verkleidungstür (24) des Motors zu verbinden, wobei die Mutter (80) relativ zu der Schraubenwelle (68) verschiebbar ist, um die Verkleidungstür (24) zwischen einer ersten Position und einer zweiten Position zu überführen; und
eine Leerlaufvorrichtung (90), die an die Kolbenstange (82) gekoppelt und innerhalb des hohlen Innenraums der Kolbenstange angeordnet ist, wobei die Leerlaufvorrichtung eine Druckschraubenfeder umfasst, die innerhalb des hohlen Innenraums der Kolbenstange (82) und zwischen einem sich nach innen erstreckenden Flansch (89) der Kolbenstange und dem Stangenende (88) angeordnet ist, wobei das Stangenende (88) verschiebbar in der hohlen Kolbenstange montiert ist, wobei die Leerlaufvorrichtung (90) betreibbar ist, um mechanische Schwingungen der Verkleidungstür (24) und eine Wärmeausdehnung des Motorgehäuses zu absorbieren.

2. System nach Anspruch 1, wobei die Mutter (80) einen Keil (92) beinhaltet und eine Innenfläche des Gehäuses (60) eine Keilnut beinhaltet, in der der Keil (92) aufgenommen ist.

3. System nach Anspruch 1 oder 2, ferner umfassend eine erste Halterung, die angrenzend an ein erstes Ende des Gehäuses (60) montiert ist, und eine zweite Halterung, die an einem Ende der Kolbenstange (82) montiert ist, wobei die erste Halterung die Aktuatorbaugruppe (26) an ein Motorgehäuse koppelt und die zweite Halterung die Aktuatorbaugruppe an die Verkleidungstür (24) koppelt.

4. System nach einem der vorstehenden Ansprüche, wobei das Getriebe ein Paar Kegelräder (78a, 78b) umfasst.

5. System nach einem der vorstehenden Ansprüche, wobei das Getriebe die Schraubenwelle (68) an einen Antriebseingang koppelt, der einen Drehmomentbegrenzer (56) umfasst, wobei der Drehmomentbegrenzer (56) dazu konfiguriert ist, an einem Ende eines Hubs der Kolbenstange (82) zu rutschen.

6. System nach einem der vorstehenden Ansprüche, ferner umfassend eine selbsthemmende Vorrichtung (71), die an die Schraubenwelle (68) gekoppelt ist.

7. System nach einem der vorstehenden Ansprüche, wobei die Aktuatorbaugruppe(26) manuell angetrieben ist.

8. System nach einem der Ansprüche 1 bis 6, wobei die Aktuatorbaugruppe (26) elektrisch angetrieben ist.

9. System nach Anspruch 8, ferner umfassend einen Elektromotor (46), der über eine flexible Drehwelle (52) an die Aktuatorbaugruppe (26) wirkgekoppelt ist.

10. System nach Anspruch 8, ferner umfassend:
ein Untersetzungsgetriebe, das an den Elektromotor (46) gekoppelt ist; und
einen Schalter, der mit einer elektrischen Leistungsquelle verbunden ist, die in der Lage ist, die Polarität des Eingangs in den Elektromotor zu ändern, sodass die Drehrichtung des Motors umgekehrt werden kann.

11. Verfahren zum Öffnen und Schließen der Verkleidungstüren (24) eines Flugzeugtriebwerks, umfassend:
Bereitstellen des Aktuatorsystems nach Anspruch 1, das dazu konfiguriert ist, eine bewegliche Verkleidung zu verschieben;
Bereitstellen eines Drehmoments an einen Antriebseingang der Aktuatorbaugruppe (26), wobei der Antriebseingang mit dem Getriebe in Verbindung steht;
Drehen der Schraubenwelle (68) in einer ersten Richtung, sodass sich die an die Schraubenwelle (68) gekoppelte Mutter (80) relativ zu der Schraubenwelle bewegt, wodurch bewirkt wird, dass sich die bewegliche Verkleidung von einer ersten Position in eine zweite Position verschiebt.

12. Verfahren nach Anspruch 11, ferner umfassend Drehen der Schraubenwelle (68) in einer zweiten, entgegengesetzten Richtung, sodass sich die an die Schraubenwelle (68) gekoppelte Mutter (80) relativ zu der Schraubenwelle (68) bewegt, wodurch bewirkt wird, dass sich die bewegliche Verkleidungstür (24) von der zweiten Position in die erste Position verschiebt.

13. Verfahren nach Anspruch 11 oder 12, wobei das Bereitstellen von Drehmoment an den Antriebseingang Übertragen von Drehmoment von einem Elektromotor (46) über eine flexible Drehwelle (52) an den Antriebseingang umfasst.

14. Verfahren nach Anspruch 11 oder 12, wobei das Bereitstellen eines Drehmoments an den Antriebseingang manuelles Zuführen eines Drehmoments zu dem Antriebseingang umfasst.

## Revendications

1. Système (40) permettant de commander le déplacement d'une porte de capot de moteur d'aéronef (24) comprenant :
un ensemble actionneur (26) comportant :
un boîtier (60) ;
un arbre à vis (68) disposé au moins partiellement à l'intérieur d'un intérieur creux du boîtier (60), l'arbre à vis (68) pouvant tourner autour d'un axe par rapport au boîtier (60) ;
un système de transmission couplé à l'arbre à vis (68) pour communiquer une rotation à l'arbre à vis (68) autour de l'axe ;
un écrou (80) en prise avec l'arbre à vis (68) ;
une tige de piston (82) ayant une première extrémité (84) et une seconde extrémité (91) et un intérieur creux, la première extrémité (84) étant reliée à l'écrou (80) ; une extrémité de tige (88) montée sur la seconde extrémité (91) de la tige de piston permettant de relier l'écrou (80) à la porte de capot (24) du moteur, dans lequel l'écrou (80) peut être translaté par rapport à l'arbre à vis (68) pour faire passer la porte de capot (24) entre une première position et une seconde position ; et un dispositif de déplacement à vide (90) couplé à la tige de piston (82) et disposé à l'intérieur de l'intérieur creux de la tige de piston, le dispositif de déplacement à vide comprenant un ressort hélicoïdal de compression disposé à l'intérieur de l'intérieur creux de la tige de piston (82) et entre une bride s'étendant vers l'intérieur (89) de la tige de piston et de l'extrémité de tige (88), dans lequel l'extrémité de tige (88) est montée de manière coulissante dans la tige de piston creuse,
le dispositif de déplacement à vide (90) pouvant fonctionner pour absorber les vibrations mécaniques de la porte de capot (24) et la dilatation thermique du carter moteur.

2. Système selon la revendication 1, dans lequel l'écrou (80) comporte une clavette (92) et une surface intérieure du boîtier (60) comporte une rainure de clavette à l'intérieur de laquelle la clavette (92) est reçue.

3. Système selon la revendication 1 ou 2, comprenant en outre un premier support monté adjacent à une première extrémité du boîtier (60) et un second support monté à une extrémité de la tige de piston (82), dans lequel le premier support couple l'ensemble actionneur (26) à un carter de moteur et le second support couple l'ensemble actionneur à la porte de capot (24).

4. Système selon une quelconque revendication précédente, dans lequel la transmission comprend une paire d'engrenages coniques (78a, 78b).

5. Système selon une quelconque revendication précédente, dans lequel la transmission couple l'arbre à vis (68) à une entrée d'entraînement comportant un limiteur de couple (56), dans lequel le limiteur de couple (56) est configuré pour glisser en fin de course de la tige de piston (82).

6. Système selon une quelconque revendication précédente, comprenant en outre un dispositif anti-retour (71) couplé à l'arbre à vis (68).

7. Système selon une quelconque revendication précédente, dans lequel l'ensemble actionneur (26) est alimenté manuellement.

8. Système selon l'une quelconque des revendications 1 à 6, dans lequel l'ensemble actionneur (26) est alimenté électriquement.

9. Système selon la revendication 8, comprenant en outre un moteur électrique (46) couplé de manière opérationnelle à l'ensemble actionneur (26) par l'intermédiaire d'un arbre rotatif flexible (52).

10. Système selon la revendication 8, comprenant en outre :
un réducteur de vitesse couplé au moteur électrique (46) ; et
un interrupteur connecté à une source d'alimentation électrique qui est capable de changer la polarité de l'entrée du moteur électrique de sorte que le sens de rotation du moteur peut être inversé.

11. Procédé d'ouverture et de fermeture des portes de capot (24) d'un moteur d'aéronef comprenant :
la fourniture du système d'actionnement selon la revendication 1, configuré pour translater un capot mobile ;
la fourniture d'un couple à une entrée d'entraînement de l'ensemble actionneur (26), l'entrée d'entraînement étant en communication avec la transmission ;
la rotation de l'arbre à vis (68) dans un premier sens de sorte que l'écrou (80) couplé à l'arbre à vis (68) se déplace par rapport à l'arbre à vis, provoquant ainsi la translation du capot mobile d'une première position à une seconde position.

12. Procédé selon la revendication 11, comprenant en outre la rotation de l'arbre à vis (68) dans un second sens opposé de sorte que l'écrou (80) couplé à l'arbre à vis (68) se déplace par rapport à l'arbre à vis (68), provoquant ainsi la translation de la porte de capot mobile (24) de la seconde position à la première position.

13. Procédé selon la revendication 11 ou 12, dans lequel la fourniture d'un couple à l'entrée d'entraînement comporte la transmission d'un couple d'un moteur électrique (46) à l'entrée d'entraînement par l'intermédiaire d'un arbre rotatif flexible (52) .

14. Procédé selon la revendication 11 ou 12, dans lequel la fourniture d'un couple à l'entrée d'entraînement comporte la fourniture manuelle d'un couple à l'entrée d'entraînement.
